(19) Europäisches Patentamt
European Patent Office
Office européen des brevets

(11) EP 0 915 067 A2

(12) # EUROPEAN PATENT APPLICATION

(43) Date of publication:
12.05.1999 Bulletin 1999/19

(51) Int. Cl.[6]: **C04B 35/571**, H01M 4/02, H01M 4/58

(21) Application number: 98120439.9

(22) Date of filing: 29.10.1998

(84) Designated Contracting States:
**AT BE CH CY DE DK ES FI FR GB GR IE IT LI LU MC NL PT SE**
Designated Extension States:
**AL LT LV MK RO SI**

(30) Priority: 29.10.1997 JP 297344/97

(71) Applicant:
**Dow Corning Asia, Ltd.**
**Tokyo 100-0005 (JP)**

(72) Inventor:
**Zank, Gregg Alan**
**Dow Corning Asia Ltd.**
**Kanagawa-ken, 258-01 (JP)**

(74) Representative:
**Patentanwälte**
**Sternagel & Fleischer**
**Braunsberger Feld 29**
**51429 Bergisch Gladbach (DE)**

(54) **Tin-containing silicon oxycarbide ceramic material**

(57) This invention pertains to a ceramic material that can be used in electrodes for lithium ion secondary batteries. The ceramic material contains Sn, Si, O, and C that contains at least 1 volume% metal-phase Sn wherein the weight ratios among these elements in the ceramic material is Sn 1 : Si 0.001 to 100 : O 0.001 to 100 : C 0.001 to 100. This metallic tin is formed by thermal reduction by carbon.

EP 0 915 067 A2

## Description

### FIELD OF THE INVENTION

This invention pertains to ceramic material that has potential for use in rechargeable lithium ion batteries. More particularly, this material can be used as a anode that reversibly stores lithium ions.

### BACKGROUND OF THE INVENTION

It is desirable in anode materials used for rechargeable lithium ion batteries to have the following properties:

(1) chemical inertness toward the other battery components, for example, the lithium, electrolyte salts, and organic polymer electrolyte medium;
(2) the ability to store large amounts of lithium (This has a direct influence on the energy capacity of the battery);
(3) the ability to reversibly store or bind a large fraction of the lithium (This influences the efficiency of the battery.);
(4) lithium storage that minimizes the risks associated with lithium in this application and that minimizes agglomeration;
(5) a high tap density that raises the volume efficiency in the application under consideration.

Almost all of the anodes for rechargeable lithium ion batteries that satisfy these requirements are graphite. Graphite is chemically inert, can reversibly bind reasonable amounts of lithium, and has a capacity of about 330 mAh/g (all but 10% reversible). Graphite has a relatively high tap density of 1.2 g/cm$^3$, which is better than that of the relatively low-crystalline forms of carbon. While the relatively low-crystalline forms of carbon do have high lithium capacities, their density is a mere 0.6 to 0.8 g/cm$^3$. Ceramic materials containing amorphous Si also have some utility as anodes for rechargeable lithium ion batteries.

Recent developments have suggested that alloy systems can provide good anode functionality in the rechargeable batteries. Canadian Patent Application Number 2,134,053 to Fujifilm Celltec Co. claims that a tin-containing anode has a theoretical volume and weight capacity that is 2- to 4-times better than that of carbon. The Fujifilm Celltec application asserts a mechanism comprising penetration into a amorphous tin oxide matrix. However, recent research has shown that this mechanism includes an initial reduction of the tin oxide by lithium with the formation of lithium oxide and metallic tin. This metallic tin is thereafter held in a matrix of the $Li_2O$ and in this state becomes alloyed with excess metallic lithium. With this anode the reduction of the tin oxide to metallic tin clearly occurs during the first discharge of the battery, which results in the loss of large amounts of lithium to the irreversible capacity; and the microstructure of the amorphous oxide anode material must be very strictly controlled in order to suitably control the dispersion of the tin oxide compound in the matrix as a whole.

Notwithstanding these two shortcomings, the discovery described above has potential. An approach based on polymer dispersed in the material and microstructure will generally be the easier strategy. By relying on the carbon produced from a polymer precursor in order to effect reduction of the tin oxide compound by thermal reduction with carbon, the large irreversible capacity seen in the first charge/discharge cycle can be eliminated. This discovery indicates the possibility of using material derived from a simple organosilicon polymer as an anode material that will have a large lithium reversible capacity ad small irreversible capacity.

### SUMMARY OF THE INVENTION

This invention pertains to a ceramic material that contains Sn, Si, O, and C that contains at least 1 volume% metal-phase Sn, wherein the weight ratios of Sn, Si, O, and C in the ceramic material is **Sn** 1 : **Si** 0.001 to 100 : **O** 0.001 to 100 : **C** 0.001 to 100.

This invention also pertains to a method for producing the ceramic material by subjecting a precursor capable of undergoing pyrolysis to give a ceramic material that contains Sn, Si, O, and C and at least 1 volume% metal-phase Sn, to pyrolysis at a temperature sufficient to reduce the tin species in the precursor to metallic tin, wherein the weight ratios of Sn, Si, O, and C in the ceramic material is **Sn** 1 : **Si** 0.001 to 100: **O** 0.001 to 100 : **C** 0.001 to 100.

### DETAILED DESCRIPTION OF THE INVENTION

This invention pertains to a ceramic material that contains Sn, Si, O, and C that contains at least 1 volume% metal-phase Sn, wherein the weight ratios of Sn, Si, O, and C in the ceramic material is **Sn** 1 : **Si** 0.001 to 100 : **O** 0.001 to 100 : **C** 0.001 to 100.

This invention also pertains to a method for producing the ceramic material by subjecting a precursor capable

of undergoing pyrolysis to give a ceramic material that contains Sn, Si, O, and C and at least 1 volume% metal-phase Sn, to pyrolysis at a temperature sufficient to reduce the tin species in the precursor to metallic tin, wherein the weight ratios of Sn, Si, O, and C in the ceramic material is **Sn** 1 : **Si** 0.001 to 100: **O** 0.001 to 100 : **C** 0.001 to 100. During this pyrolysis the Sn-O in the tin compound is reduced through a thermal reduction by the carbon. This reaction can be comprehensively represented by the following equation. ≥°

$$SnO + C \xrightarrow{\geq 500°C} CO + Sn$$

The temperature at which the ceramic precursor is subjected to pyrolysis in the method is preferably from 500°C to 1,400°C and more preferably from 1,000°C to 1,200°C. Preferably the rate of temperature rise into the 500°C to 1,400°C range is less than 10°C/minute.

The method for preparing the ceramic material must yield metallic tin dispersed throughout the SiOC ceramic material. While the means for accomplishing this is not critical, at the ceramic precursor stage, for example, methods can be used in which the tin species is preliminarily dispersed into the ceramic precursor. When the ceramic precursor is a mixture, these methods can be exemplified by:

1) dissolution of the mixture in a solvent, dispersion of the tin species by a means such as ultrasound, removal of the solvent;
2) dry blending of the mixture when each component in the particular ceramic precursor is a powder.

Another suitable method comprises the use as the ceramic precursor of a compound in which the tin species has already been chemically bonded.

Ceramic precursors useful in the method of this invention can be exemplified as follows:

(a) tin-containing organopolysiloxane polymers;
(b) mixtures of an organosilicon polymer and at least 1 selection from organotin polymers, tin oxide compounds, and organotin compounds;
(c) mixtures of amorphous SiOC powder and tin oxide compound powder;
(d) tin compound derivatives of organosilicon polymers; and
(e) silicon compound derivatives of organotin polymers.

Preferably the ceramic precursor has a char yield of at least 50 weight%. The ceramic precursor may also contain carbonaceous material and/or a filler.

Ceramic precursor (a) is a compound in which the Sn atom is inserted into a polysiloxane backbone, for example, with a structure as given below.

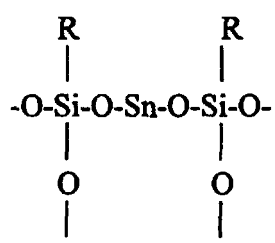
or
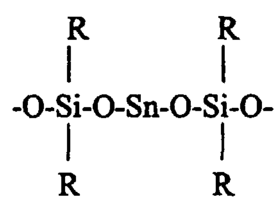

wherein R is alkyl having no more than 6 carbons or phenyl. Ceramic precursor (a) can be exemplified by stannane-organopolysiloxane polymers.

The organosilicon polymer in ceramic precursor (b) can be exemplified by the following:

① Organopolysiloxanes such as silicone oils and silicone resins.
② Polysilanes: $(R^1{}_2Si)_n$ in which $R^1$ is the hydrogen atom or an organic group and **n** is an integer with a value of at least 2.
③ Polysilazanes: $(R^1Si(NH)_{3/2})_n$ in which $R^1$ is the hydrogen atom or an organic group and n is an integer with a value of at least 2.
④ Polycarbosilanes: $(R^1Si(CH_2)_{3/2})_p(R^1R^2SiCH_2)_{1-p}$ in which $R^1$ and $R^2$ are the hydrogen atom or an organic group and 0 < **p** < 1.
⑤ Polysilarylenes: $-(R^3{}_2Si-R^4)_n-$ in which $R^3$ is a organic group, $R^4$ is a substituted or unsubstituted divalent aromatic hydrocarbon group, and **n** is a integer with a value of at least 2.

⑥ Polysilalkylenes: $-(R^3{}_2Si-R^5)_n-$ in which $R^3$ is a organic group, $R^5$ is an alkylene group having 2 to 5 carbons, and **n** is an integer with a value of at least 2.

⑦ Copolymers between organic polymers and a selection from ① to ⑥.

The organotin polymer in ceramic precursor (b) is a polymer in which Sn is bonded in the main chain, or in the side chain, or at the terminals of an organic polymer. This organotin polymer can be exemplified by the basic backbone structure $-(R^6{}_2SnO)_n-$ in which **n** is an integer with a value of at least 2 and $R^6$ is a hydrocarbon group having from 1 to 10 carbons.

The tin oxide compound in ceramic precursor (b) can be, for example, SnO or $SnO_2$. The powders of tin oxide compounds are very suitably used here, for example, SnO powder or $SnO_2$ powder.

The organotin compound in ceramic precursor (b) is a organic compound that contains tin in a chemically bonded form. No specific restrictions apply to this organotin compound as long as it does not have a negative influence on the advantageous effects of the present invention. The tin can be in the divalent or tetravalent state. The subject organotin compound can be exemplified by the following. $CH_3-C(=O)O-Sn-O-C(=O)-CH_3$; dibutyltin diacetate; and dibutyltin dilaurate.

Ceramic precursor (d), a tin compound derivative of a organosilicon polymer, is afforded by the chemical reaction of an organosilicon polymer as described above and a tin compound that contains the tin atom within its structure. There are no specific restrictions on ceramic precursor (d) as long as it is an organosilicon polymer in which the Sn atom is bonded. An example of ceramic precursor (d) is the compound with the structure $(R^7SiO_{3/2})_m(R^8{}_2SnO_{2/2})_n$ wherein **m** and **n** are each integers with a value of at least 2 produced by the reaction of$(R^7SiO_{3/2})_x$ and $R^8{}_2Sn(OR^9)_2$ wherein **x** is a integer with a value of at least 2 and $R^7$, $R^8$, and $R^9$ are each hydrocarbon groups having from 1 to 18 carbons. The tin compound can be any tin compound that will participate in the reaction under consideration, for example, tin oxide compounds and organotin compounds.

Ceramic precursor (e), the silicon compound derivative of an organotin polymer, is obtained by the reaction of a silicon-containing compound with an organotin polymer as described above. An example of ceramic precursor (e) is the compound with the structure $(-R_2Sn(-CH_2CH(SiR'_3))-O-)_y$ as afforded by the reaction of $(-R'_2Sn(-CH=CH)-O-)_x$ and $HSiR^8{}_3$ wherein **x** and **y** are both integers with a value of at least 2 and $R^7$ and $R^8$ are both hydrocarbon groups having from 1 to 18 carbon atoms.

The ceramic precursor may contain small amounts of elements other than Sn, Si, O, and C insofar as such other elements do not inhibit the thermal reduction of the Sn-O bond by carbon that is produced in the pyrolysis reaction. The additional elements can be exemplified by, but are not limited to, hydrogen and nitrogen.

Highly suitable examples of ceramic precursors useable in this invention are:

(1) Mixtures of SnO powder and 1 or more selections from DT resins, MQ resins, MDT resins, and organopolysilsesquioxanes.

(2) Mixtures of SnO powder and $(R^7SiO_{3/2})_x(R^8{}_2SiO)_y$ in which $R^7$ and $R^8$ are each independently selected from hydrocarbon groups having from 1 to 18 carbons and **x** and **y** are each integers with a value of at least 2.

(3) Mixtures of SnO powder and $(PhSiO_{1.5})_a(MeSiO_{1.5})_b(PhMeSiO)_c(Ph_2SiO)_d$ in which Ph = phenyl, Me = methyl, and $a + b + c + d = 1$ .

(4) Mixtures of SnO powder and amorphous SiOC powder.

(5) Mixtures of a tin dioctanoate compound or diacetoxytin compound with $(PhSiO_{1.5})_a(MeSiO_{1.5})_b(PhMeSiO)_c(Ph_2SiO)_d$ in which Ph = phenyl, Me = methyl, and $a + b + c + d = 1$ .

The ceramic precursor is capable of undergoing pyrolysis to give the ceramic material containing Sn, Si, O, and C, but the ceramic precursor per se need not contain the oxygen atom since this can be supplied from the air during pyrolysis (although, of course, the presence of the oxygen atom in the precursor is entirely unproblematic). However, tin, silicon, and carbon are essential components for the precursor. Typical elemental compositions for the precursor in the ceramic are as follows:

(1) tin, silicon, carbon
(2) tin, silicon, carbon, hydrogen
(3) tin, silicon, carbon, oxygen
(4) tin, silicon, carbon, hydrogen, oxygen
(5) tin, silicon, carbon, hydrogen, oxygen, nitrogen.

This invention also pertains to a electrode material comprising the tin containing silicon oxycarbide ceramic material into which lithium ions have been introduced and to a rechargeable lithium ion battery that has been fabricated

using electrode material. This electrode material, because it contains metallic tin produced by the thermal reduction by carbon, suffers from little deterioration in electrode performance during repetitive charging and discharging.

The method for preparing the electrode material comprises:

(1) preparing a tin-containing silicon oxycarbide ceramic material by the pyrolysis at from 500°C to 1,400°C of a ceramic precursor that is capable of undergoing pyrolysis to give a ceramic material that contains Sn, Si, O, and C and at least 1 volume% metal-phase Sn wherein the weight ratios of Sn, Si, O, and C in the ceramic material is **Sn** 1 : **Si** 0.001 to 100 : **O** 0.001 to 100 : **C** 0.001 to 100; and

(2) introducing lithium ions into the tin-containing silicon oxycarbide ceramic material.

The lithium ion battery electrode material may also be prepared by a method comprising pyrolyzing a composition that contains the ceramic precursor; converting the ceramic material into a powder; mixing this powder with binder and diluent to form a mixture; molding the mixture into a desired electrode shape; and thereafter introducing lithium ions.

The lithium ion battery electrode material may also be prepared by a method comprising blending a tin compound into the pyrolysis product derived from a composition that contains a ceramic precursor that will give ceramic material containing Si, O, and C, and introducing lithium ions into the ceramic material. The tin compound may be metallic tin, tin oxide or tin carbide. The ceramic precursor may comprise organopolysiloxane, polysilazane, polysilane, or polycarbosilane or a blend of least 2 polymers selected from organopolysiloxanes, silalkylenes, silarylenes, silazanes, silanes, and organic polymers. Preferably the ceramic precursor has a char yield of at least 50 weight%. The composition containing ceramic precursor may also contain carbonaceous material and/or filler. Preferably, the composition containing ceramic precursor is pyrolyzed in the temperature range from 500°C to 1,400°C using a heating rate of 10°C/minute. The ceramic material may made into a powder, a mixture is prepared by mixing this powder with binder and diluent, the mixture thus obtained is molded into a desired electrode shape, and lithium ions are thereafter introduced.

## EXAMPLES

1. Materials

All of the organosiloxane materials were obtained from the Dow Corning Corporation as intermediates. The tin oxide was the product of Wako Junyaku Kabushiki Kaisha.

2. Preparation of the ceramic samples

Polymer pyrolysis was carried out in a Lindberg Model 54434 or similar tube furnace equipped with Eurotherm temperature controllers. In a typical pyrolysis, the sample was weighed out (approximately 6.0 g) and placed in a alumina boat and loaded into the furnace. The furnace was purged with argon at a rate sufficient to provide 1 exchange in the furnace atmosphere every 3 minutes. After purging for 45 to 60 minutes, the flow rate was dropped so as to provide 1 exchange every 6 minutes and the temperature was raised to the final temperature of 1,000°C and maintained there for 60 minutes. The ceramic sample was reweighed and ground for testing and analysis.

3. Analysis

X-ray powder diffraction was run using a JEOL horizontal theta-theta automatic goniometer equipped with a sample spinner, low background sample holders, graphite monochromator, scintillation counter, long fine focus copper target tube, and computer-controlled operation. The solid sample was always ground to a fine powder of 100 mesh or smaller free of any grit feeling using an alumina grinder in order to minimize the contamination from grinding. The scans were carried out at a rate of 1° 2-theta per minute from 6 to 90 2-theta with the x-ray tube operated at a tube voltage of 40 kV and a tube current of 30 mA. Rapid phase identification was carried out by comparison with a reference file.

Carbon and hydrogen analysis was run using a Perkin Elmer™ 2400 analyzer. Oxygen analysis was carried out with a Leco™ oxygen analyzer model RO-316 equipped with a EF100 electrode furnace and oxygen determinator 316 (model 783700). Silicon analysis was run by a fusion technique in which the solid was converted to a soluble form and the solute was analyzed for total silicon by inductively coupled high-frequency plasma-atomic emission spectroscopy (ICP-AES) using an Applied Research Laboratories model 3580. Tables 2, 5, 7, and 9 report the results of the analyses of the obtained ceramic materials by the analytic methods described above. The "wt% C" in these tables indicates the weight% of carbon in the ceramic material, and the same applies hereinbelow to H (hydrogen), Si (silicon), Sn (tin), and oxygen.

EXAMPLES 1 TO 4 AND COMPARATIVE EXAMPLE 1

Polymer/powder blends

Using the quantities reported in Table 1, organosilicon polymer with the formula $(PhSiO_{1.5})_{0.40}(MeSiO_{1.5})_{0.45}(PhMeSiO)_{0.05}(Ph_2SiO)_{0.10}$ was dissolved in toluene (10 weight%), the SnO powder was added, dispersion was effected by treatment with ultrasound, and the solvent was subsequently removed by evaporation on a rotary evaporator to give a blend. This blend was removed from the flask ad pyrolyzed by heating to 1,000°C as described above. The results are reported in Table 1 and 2. In Examples 1-4 it was confirmed by x-ray diffraction (XRD) that the tin species present was metallic tin.

Table 1

| example number | weight of polymer (g) | weight of SnO (g) | char yield (wt%) |
|---|---|---|---|
| Comparative Example 1 | 10.0 | 0.0 | 77.0 |
| Example 1 | 3.0 | 6.72 | 79.2 |
| Example 2 | 4.0 | 5.04 | 78.6 |
| Example 3 | 6.0 | 2.94 | 74.9 |
| Example 4 | 7.0 | 1.68 | 68.1 |

Table 2

| Specifications of the ceramics | | | | | |
|---|---|---|---|---|---|
| example | wt% C | wt% H | wt% Si | wt% Sn | wt% oxygen |
| 1 | 3.0 | trace | 7.1 | 51.3 | 38.6 |
| 2 | 8.6 | 0.1 | 9.9 | 46.2 | 35.2 |
| 3 | 26.8 | 0.7 | 22.7 | 16.4 | 33.4 |
| 4 | 24.3 | 1.0 | 21.5 | 16.3 | 36.9 |

EXAMPLES 5 TO 9

SiOC powder/powder blends

Using the quantities reported in Table 3, blends were prepared by dry blending SnO powder with amorphous SiOC powder (Si content = 29.6 weight%, O content = 26.0 weight%, C content = 41.0 weight%) derived from polymer. An aliquot of each blend was pyrolyzed by heating to 500°C as described above. The results are reported in Table 3. The XRD spectrum for each example showed the tin species present to be metallic Sn.

Table 3

| example number | weight of SiOC (g) | weight of SnO (g) | char yield (wt%) |
|---|---|---|---|
| Example 5 | 1.0 | 4.43 | 97.9 |
| Example 6 | 2.0 | 4.43 | 98.3 |
| Example 7 | 2.0 | 5.21 | 98.7 |
| Example 8 | 4.0 | 2.21 | 99.2 |
| Example 9 | 4.0 | 1.11 | 99.2 |

EXAMPLES 10 TO 14

SiOC powder/powder blends

Using the quantities reported in Table 4, blends were prepared by dry blending SnO powder with amorphous SiOC powder (Si content = 29.6 weight%, O content = 26.0 weight%, C content = 41.0 weight%) derived from polymer. An aliquot of each blend was pyrolyzed by heating to 600°C as described above. The results are reported in Tables 4 and 5. The XRD spectrum for each example showed the tin species present to be metallic Sn.

Table 4

| example number | weight of SiOC (g) | weight of SnO (g) | char yield (wt%) |
|---|---|---|---|
| Example 10 | 1.0 | 4.43 | 97.9 |
| Example 11 | 2.0 | 4.43 | 98.3 |
| Example 12 | 2.0 | 5.21 | 98.7 |
| Example 13 | 4.0 | 2.21 | 99.2 |
| Example 14 | 4.0 | 1.11 | 99.2 |

Table 5

| Specifications of the ceramics | | | | | |
|---|---|---|---|---|---|
| example no. | wt% C | wt% H | wt% Si | wt% Sn | wt% oxygen |
| Example 10 | 7.7 | 0.5 | 4.4 | 46.7 | 40.7 |
| Example 12 | 20.8 | 0.6 | 14.5 | 36.8 | 27.3 |
| Example 13 | 31.3 | 0.5 | 25.7 | 14.4 | 28.1 |

EXAMPLES 15 TO 17

Polymer/polymer

Using the quantities reported in Table 6, organosilicon polymer with the formula $(PhSiO_{1.5})_{0.40}(MeSiO_{1.5})_{0.45}(PhMeSiO)_{0.05}(Ph_2SiO)_{0.10}$ was dissolved in toluene (10 weight%), organotin polymer (dioctyltin oxide) was added, dispersion was effected by treatment with ultrasound, and the solvent was subsequently removed by evaporation on a rotary evaporator to give a blend. This blend was removed from the flask and pyrolyzed by heating to 1,000°C as described above. The results are reported in Tables 6 and 7. The XRD spectrum for each example showed the tin species present to be metallic Sn.

Table 6

| example number | weight of Si polymer (g) | weight of $Sn((oct)_2SnO)_n$ (g) | char yield (wt%) |
|---|---|---|---|
| Example 15 | 4.0 | 2.0 | 48.7 |
| Example 16 | 3.0 | 3.0 | 41.9 |
| Example 17 | 2.0 | 4.0 | 35.7 |

Table 7

| Specifications of the ceramics | | | | | |
|---|---|---|---|---|---|
| example no. | wt% C | wt% H | wt% Si | wt% Sn | wt% oxygen |
| Example 15 | 26.9 | 0.9 | 28.4 | 12.6 | 31.2 |
| Example 16 | 18.5 | trace | 26.2 | 22.2 | 33.1 |
| Example 17 | 5.5 | trace | 22.9 | 34.9 | 36.7 |

EXAMPLES 18 TO 22

Polymer/polymer

Using the quantities reported in Table 8, organosilicon polymer with the formula $(PhSiO_{1.5})_{0.40}(MeSiO_{1.5})_{0.45}(PhMeSiO)_{0.05}(Ph_2SiO)_{0.10}$ was dissolved in toluene (10 weight%), organotin monomer (diacetoxytin) was added, dispersion was effected by treatment with ultrasound, and the solvent was subsequently removed by evaporation on a rotary evaporator to give a blend. This blend was removed from the flask, cured at 200°C under a nitrogen atmosphere, and pyrolyzed by heating to 1,000°C as described above. The results are reported in Tables 8 ad 9. The spectrum for each example showed the tin species present to be metallic Sn.

Table 8

| example number | weight of Si polymer (g) | weight of $(acetoxy)_2Sn$ (g) | char yield (wt%) |
|---|---|---|---|
| Example 18 | 9.0 | 1.0 | 77.9 |
| Example 19 | 8.0 | 2.0 | 74.1 |
| Example 20 | 7.0 | 3.0 | 71.4 |
| Example 21 | 6.0 | 4.0 | 72.1 |
| Example 22 | 5.0 | 5.0 | 71.5 |

Table 9

| Specifications of the ceramics | | | | | |
|---|---|---|---|---|---|
| example no. | wt% C | wt% H | wt% Si | wt% Sn | wt% oxygen |
| Example 18 | 34.4 | 0.7 | 29.2 | 4.3 | 31.4 |
| Example 20 | 25.5 | trace | 27.5 | 11.9 | 35.1 |
| Example 22 | 17.5 | 0.3 | 24.4 | 22.9 | 34.9 |

The following Table 10 reports the volume% of metallic tin (metal-phase Sn) in the ceramic materials for Examples 1 to 4, 10, 12, 13, 15 to 18, 20, and 22.

Table 10

| Example number | volume% metallic tin in the ceramic materials |
|---|---|
| 1 | 22.6 |
| 2 | 19.3 |

Table 10 (continued)

| Example number | volume% metallic tin in the ceramic materials |
|---|---|
| 3 | 5.2 |
| 4 | 5.1 |
| 10 | 19.6 |
| 12 | 13.9 |
| 13 | 4.5 |
| 15 | 3.9 |
| 16 | 7.3 |
| 17 | 13.0 |
| 18 | 1.2 |
| 20 | 3.6 |
| 22 | 7.6 |

## Claims

1. A ceramic material comprising Sn, Si, O, and C that contains at least 1 volume% metal-phase Sn, wherein the weight ratio of Sn, Si, O, and C in the ceramic material is Sn 1 : Si 0.001 to 100 : O 0.001 to 100 : C 0.001 to 100.

2. A method for the preparation of the ceramic material described in Claim 1,comprising subjecting a ceramic precursor, said ceramic precursor being capable of undergoing pyrolysis to give a ceramic material that contains Sn, Si, O, and C and at least 1 volume% metal-phase Sn, to pyrolysis at a temperature sufficient to reduce the tin species in the precursor to metallic tin, wherein the weight ratio of Sn, Si, O, and C in the ceramic material is Sn 1 : Si 0.001 to 100 : O 0.001 to 100 : C 0.001 to 100.

3. The method as claimed in claim 2 wherein the ceramic precursor is a tin-containing organopolysiloxane polymer.

4. The method as claimed in claim 2 wherein the ceramic precursor is a mixture of an organosilicon polymer and at least one tin compound selected from the group consisting of organotin polymers, tin oxide compound and organotin compounds.

5. The method as claimed in claim 2 wherein the ceramic precursor is a mixture of amorphous SiOC powder and tin oxide compound powder.

6. The method as claimed in claim 2 wherein the ceramic precursor is a tin oxide derivative of organosilicon polymers.

7. The method as claimed in claim 2 wherein the ceramic precursor is a silicon compound derivative of organotin polymers.

8. The method as claimed in claim 4 wherein the organosilicon polymer is selected from the group consisting of organopolysiloxanes, polysilanes, polysilazanes, polycarbosilanes, polysilarylenes, polysilalkylenes, copolymer of an organic polymer and an organopolysiloxane, copolymer of an organic polymer and a polysilane, copolymer of an organic polymer and a polysilazane, copolymer of an organic polymer and an polycarbosilane, copolymer of an organic polymer and a polysilarylene, and copolymer of an organic polymer and a polysilalkylene.

9. The method as claimed in claim 2 wherein the ceramic precursor additionally contains the elements selected from hydrogen and nitrogen.

10. The method as claimed in claims 2 wherein the temperature is from 500°C to 1,400°C.

11. An electrode material for lithium batteries, comprising a ceramic material comprising Sn, Si, O, and C that contains

at least 1 volume% metal-phase Sn into which lithium ions have been introduced, wherein the weight ratio of Sn, Si, O, and C in the ceramic material is Sn 1 : Si 0.001 to 100 : O 0.001 to 100 : C 0.001 to 100.

**12.** A method for preparing a lithium battery electrode comprising

pyrolyzing at temperature of from 500°C to 1,400°C a ceramic precursor that is capable of undergoing pyrolysis to give a ceramic material that contains Sn, Si, O, and C and at least 1 volume% metal-phase Sn, wherein the weight ratios among these elements in the ceramic material is Sn 1 : Si 0.001 to 100 : O 0.001 to 100 : C 0.001 to 100; and

introducing lithium ions into the ceramic material.

**13.** The method as claimed in claim 12 wherein the ceramic precursor additionally comprises a carbonaceous material.

**14.** The method as claimed in claim 12 wherein the ceramic precursor additionally contains a filler.

**15.** The method as claimed in claim 12 wherein the ceramic precursor has a char yield of at least 50%.